# EUROPÄISCHE PATENTANMELDUNG

(11) **EP 0 532 956 A2**
(43) Veröffentlichungstag der Anmeldung: **24.03.1993**
(21) Anmeldenummer: 92114658.5
(22) Anmeldetag: 27.08.1992
(51) Int. Cl.: G06F 1/16, H01R 13/453

(54) **Modulartig aufgebaute Tischcomputer-Anordnung**

(30) Priorität: 19.09.1991 DE 9111738 U
(71) Anmelder: Siemens Nixdorf Informationssysteme Aktiengesellschaft, D-33102 Paderborn (DE)
(72) Erfinder: Schelshorn, Lorenz, Dipl.-Ing.(FH), W-8000 München 45 (DE)
(74) Vertreter: Fuchs, Franz-Josef, Dr.-Ing.

(57) **Zusammenfassung**

Die Tischcomputer-Anordnung besteht aus einem Basis-Gehäuse und einem in das Basis-Gehäuse einsteckbaren, nach Art eines Notizbuches ausgebildeten tragbaren Rechnermoduls, das über Steckeranschlüsse an entsprechende Steckeranschlüsse im Basisgehäuse anschließbar ist. An der Rückseite des tragbaren Rechnermoduls ist eine die Steckeranschlüsse abdeckende, bewegbar befestigte Schutzvorrichtung vorgesehen. Ferner sind am Basis-Gehäuse im Bereich seiner Steckeranschlüsse Mittel vorgesehen, die im Nahbereich der einander gegenüberstehenden Steckeranschlüsse derart mit der Schutzvorrichtung in Eingriff kommen, daß die Schutzvorrichtung im Zuge des Einsteckvorgangs nach und nach geöffnet und beim Herausziehen des Rechnermoduls nach und nach wieder geschlossen wird.

## Beschreibung

Die Erfindung betrifft eine modulartig aufgebaute Tischcomputer-Anordnung gemäß den Merkmalen des Oberbegriffs des Anspruchs 1.

Tragbare Kleincomputer, sogenannte Laptops und insbesondere sogenannte Notebook-Rechner gewinnen zunehmend an Bedeutung, weil sie sowohl als tragbare Einzelgeräte als auch im Zusammenwirken mit einem stationären Basis-Tischgerät als leistungsfähiger PC genutzt werden können.

Die elektrische Verbindung zum Basis-Tischgerät erfolgt über an der Rückseite des Notebook-Rechners angeordnete Steckeranschlüsse, die in entsprechende Gegenstecker am Basis-Gerät eingreifen. Insbesondere bei tragbaren Notebook-Geräten sind die Steckeranschlüsse ein Problem, weil sie, falls frei zugänglich, leicht beschädigt werden können, oder weils sie durch eine abnehmbare Schutzkappe geschützt werden müssen mit der Folge, daß diese Schutzkappe dann vor dem Einstecken des Gerätes von Hand entfernt und sicher verwahrt werden muß.

Der vorliegenden Erfindung liegt deshalb die Aufgabe zugrunde, einen tragbaren Kleinrechner, insbesondere nach Art eines Note book-Rechners in der Weise auszubilden, daß einerseits ein ausreichender Schutz der rückseitigen Steckeranschlüsse gewährleistet ist, andererseits aber auch die Handhabung des Gerätes im täglichen Einsatz nicht sonderlich beeinträchtigt wird.

Die Lösung dieser Aufgabe ergibt sich erfindungsgemäß durch die kennzeichnenden Merkmale des Anspruchs 1. Vorteilhafte Weiterbildungen der Erfindungen ergeben sich aus den Merkmalen der Unteransprüche.

Zwei Ausführungsbeispiele der Erfindung werden im folgenden anhand der Zeichnung näher erläutert. Dabei zeigen:
- FIG 1 bis FIG 4: eine erste Anordnung in vier verschiedenen Einsteckpositionen
- FIG 5 bis FIG 7: eine zweite erfindungsgemäße Anordnung in drei verschiedenen Einsteckpositionen

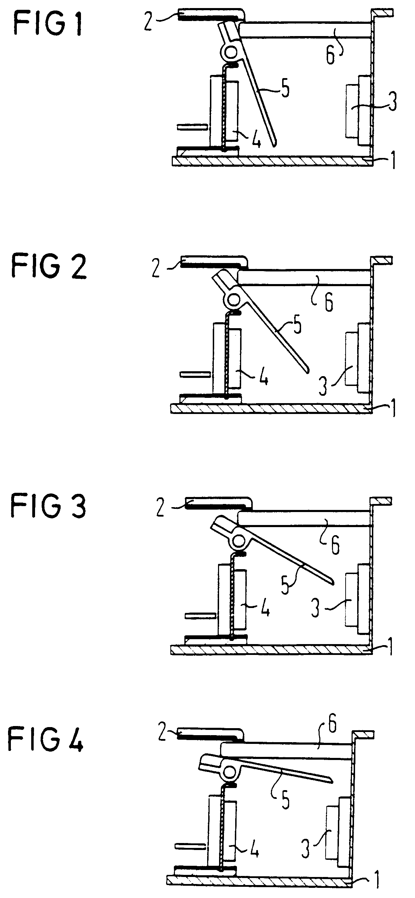

Die FIG 1 bis FIG 4 zeigen jeweils einen Ausschnitt aus einer Tischrechner-Anordnung mit einem Basis-Gehäuse 1 und einem tragbaren Rechnermodul 2, beispielsweise einem sogenannten Notebook-Rechner, der in das Basis-Gehäuse einsetzbar ist. Zur elektrischen Verbindung sind sowohl am Basis-Gehäuse 1 als auch am Rechnermodul 2 aufeinander zuweisende Steckeranschlüsse 3, 4 vorgesehen. Zum Schutz der Steckeranschlüsse 4 des tragbaren Rechnermoduls 2 ist an der Rückseite eine Klapptür 5 bewegbar befestigt. Diese Klapptür 5 ist nach Art eines zweiarmigen Hebels eingehängt und federnd vorgespannt. Beim Einstecken des Rechnermoduls 2 in das Basis-Gehäuse 1 stößt das obere Ende der Klapptür 5 gegen eine im Basis-Gehäuse 1 vorgesehene Verdrängungsleiste 6, die die Klapptür 5 Zug um Zug aufstößt. In der Endstellung ist die Klapptür 5 vollständig hochgeklappt, so daß die aufeinander zuweisenden Steckeranschlüsse 3, 4 ineinandergreifen können. Beim Herausziehen fällt die Klapptür aufgrund der federnden Einhängung wieder nach unten und deckt die Steckeranschlüsse 4 ab.

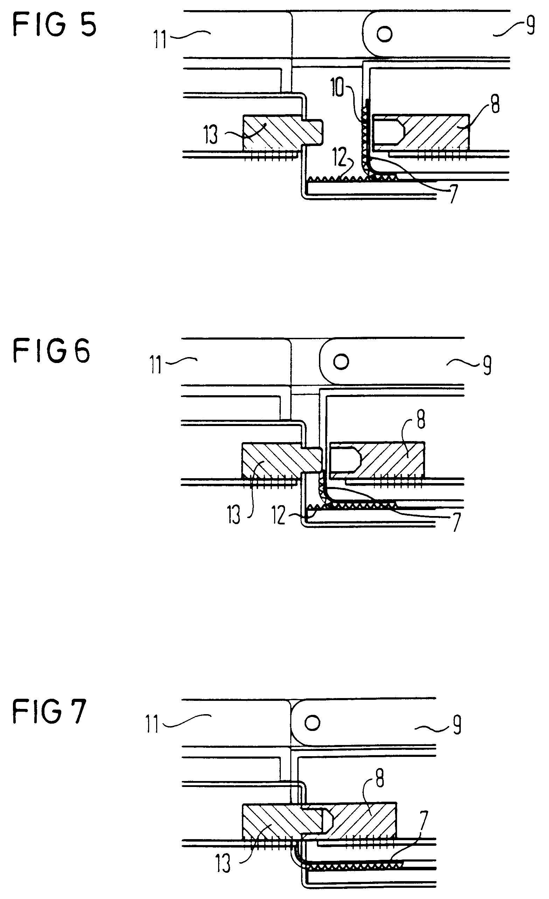

Im Ausführungsbeispiel der FIG 5 bis FIG 7 besteht die Schutzvorrichtung aus einer Rollschiebetür 7, die vor die Steckeranschlüsse 8 des Rechnermoduls 9 geschoben wird. Die Rollschiebetür 7 setzt sich in einem Bogen bis an die Unterseite des Rechnermoduls 9 fort und weist an der Außenseite eine Verzahnung 10 auf, die beim Einsetzen des Rechnermoduls 9 in eine an der Bodenfläche des Basis-Gehäuses 11 angeordnete Auflagematte 12 mit entsprechender Gegenverzahnung eingreift. Beim Einschieben des Rechnermoduls 9 in das Basis-Gehäuse 11 wird die Rollschiebetür Zug um Zug nach unten gezogen, bis die Steckeranschlüsse 8, 13 des Rechnermoduls 9 bzw. des Basis-Gehäuses 11 vollkommen ineinandergreifen. Beim Herausziehen des Rechnermoduls 9 wird die Rollschiebetür 7 wieder nach oben geschoben und die Rückwand des Rechnermoduls geschlossen.

## Patentansprüche

1. Modulartig aufgebaute Tischcomputer-Anordnung mit einem Basis-Gehäuse und einem in das Basis-Gehäuse einsteckbaren, nach Art eines Notizbuches ausgebildeten tragbaren Rechnermoduls, das über Steckeranschlüsse an entsprechende Steckeranschlüsse im Basisgehäuse anschließbar ist,
**dadurch gekennzeichnet,** daß an der Rückseite des tragbaren Rechnermoduls eine die Steckeranschlüsse abdeckende, bewegbar befestigte Schutzvorrichtung vorgesehen ist und daß am Basis-Gehäuse im Bereich seiner Steckeranschlüsse Mittel vorgesehen sind, die im Nahbereich der einander gegenüberstehenden Steckeranschlüsse derart mit der Schutzvorrichtung in Eingriff kommen, daß die Schutzvorrichtung im Zuge des Einsteckvorgangs nach und nach geöffnet und beim Herausziehen des Rechnermoduls nach und nach wieder geschlossen wird.

2. Anordnung nach Anspruch 1,
**dadurch gekennzeichnet,** daß die Schutzvorrichtung aus einer schwenkbar gelagerten Klapptür (5) besteht und daß die mit der Schutzvorrichtung in Eingriff kommenden Mittel aus einer Verdrängungsleiste (6) bestehen, die gegen eine Anschlagleiste der nach Art eines zweiarmigen Hebels gelagerten Klapptür (5) drückt.

3. Anordnung nach Anspruch 2,
**dadurch gekennzeichnet,** daß die Klapptür (5) federnd am Gehäuse des Rechnermoduls (2) eingehängt ist.

4. Anordnung nach Anspruch 1,
**dadurch gekennzeichnet,** daß die Schutzvorrichtung nach Art einer Rollschiebetür (7) mit einer eine Außenverzahnung (10) aufweisenden Oberflächenstruktur aufgebaut ist, die über die Rückwand des Rechnermoduls (9) hinaus bis in die Bodenfläche hineinreicht und daß die mit der Schutzvorrichtung in Eingriff kommenden Mittel aus einer an der Einschubfläche des das Rechnermodul (9) aufnehmenden Basis-Gehäuses im Bereich der Steckeranschlüsse vorgesehenen Auflagematte (12) mit Gegenverzahnung besteht, die derart angeordnet ist, daß die Rollschiebetür (7) nach Eingriff mit der Auflagematte (12) in die Bodenfläche gezogen wird.

5. Anordnung nach Anspruch 4,
**dadurch gekennzeichnet,** daß die Rollschiebetür (7) als ein die Verzahnung tragendes Filmscharnier ausgebildet ist.
